# EUROPÄISCHE PATENTSCHRIFT

(11) **EP 2 236 282 B1**
(45) Veröffentlichungstag und Bekanntmachung des Hinweises auf die Patenterteilung: **15.02.2012**
(21) Anmeldenummer: 10003471.9
(22) Anmeldetag: 30.03.2010
(51) Int. Cl.: B32B 19/00, C09K 21/02, E06B 5/16, D04H 1/48, D04H 13/00

(54) **Brandschutzplatte sowie Verfahren und Vorrichtung zur Herstellung einer Brandschutzplatte**
Fire-resistant board and method and device for manufacturing same
Panneau coupe-feu, tout comme procédé et dispositif de fabrication d'un panneau coupe-feu

(30) Priorität: 31.03.2009 DE 102009015136; 22.08.2009 DE 102009038564
(43) Veröffentlichungstag der Anmeldung: 06.10.2010
(73) Patentinhaber: IKJ S.a.r.l., 5531 Remich (LU)
(72) Erfinder: Jungen, Klaus, 66606 St. Wendel (DE)
(74) Vertreter: Kuhnen & Wacker

(56) Entgegenhaltungen:
- EP-A2- 0 485 867
- EP-A2- 1 347 145
- WO-A1-90/07473
- DE-A1- 4 222 207
- GB-A- 2 424 260

## Beschreibung

Die Erfindung betrifft eine Brandschutzplatte, insbesondere als Einlage für Brandschutztüren oder -tore, aus anorganischem porösem Material, insbesondere Mineralwolle, mit einem Brandschutzmittel in wenigstens einem Dickenbereich der Brandschutzplatte. Darüber hinaus betrifft die Erfindung ein Verfahren zur Herstellung einer Brandschutzplatte gemäß Anspruch 8.

Derartige Brandschutzplatten werden verwendet, um die Ausbreitung eines Brandherdes wirkungsvoll zu unterbinden. Sie kommen insbesondere als Einlage für Brandschutztüren oder -tore zum Einsatz, wobei sie darüber hinaus auch in nicht beweglichen Gebäudeteilen wie zum Beispiel Wandelementen etc. eingelegt werden. Die Feuerwiderstandsfähigkeit eines Brandschutzelements wird dabei durch die Zeitdauer bestimmt, bei der bei einem bestimmten Temperaturanstieg an einer Seite des Brandschutzelements, beispielsweise einer Brandschutztür, die andere "kalte" Seite des Brandschutzelements unter einer definierten Grenztemperatur bleibt. Die Zeitdauer in Minuten bis zum Erreichen der Grenztemperatur auf der kalten Seite wird als Standzeit bezeichnet und bestimmt nach DIN 4102 Teil 5 bzw. DIN-EN 1634-1 die Einstufung in die verschiedenen Feuerwiderstandsklassen. So bedeutet eine Einstufung in die Feuerwiderstandsklasse F30 eine 30-minütige Standzeit, entsprechend F90 eine 90-minütige Standzeit.

Durch Wärmedämmmaßnahmen alleine, wie beispielsweise durch den Einsatz von gebundenen Mineralwolleelementen, kann nur eine begrenzte Verzögerung des Temperaturanstiegs auf der kalten Seite erzielt werden. Aus diesem Grunde werden herkömmliche Brandschutzplatten mit Brandschutzmitteln versehen, deren Wärmeaufnahmekapazität dadurch wesentlich erhöht ist, dass im Brandfalle bei dem damit verbundenen Temperaturanstieg endotherme chemische und/oder physikalische Reaktionen, wie beispielsweise Phasenumwandlungen und/oder die Abgabe von physikalisch und/oder chemisch gebundenem Wasser ablaufen können. Hierdurch wird Wärme verbraucht und so die Erwärmung des Brandschutzelements auf der kalten Seite über die benötigte Zeitdauer verhindert bzw. verzögert.

Eine derartige Brandschutzplatte ist beispielsweise aus der EP 1 086 055 B1 bekannt geworden. Diese besteht aus einem integrierten Mineralwollevlics, in dessen Kemabschnitt ein Additivmaterial in erhöhter Konzentration gegenüber jedem der Außenseitenabschnitte vorliegt. Das Additivmaterial ist hier zum Beispiel ein flammhemmendes Additiv wie Magnesiumhydroxid.

Dieses Additivmaterial ist hierbei homogen im Kernabschnitt des Mineralwollevlieses angeordnet und wird im Zuge der Herstellung als festes, teilchenförmiges Material eingebracht. Das flammhemmende Additivmaterial kann gemäß der EP 1 086 055 B1 in einer Verfahrensweise so in das Produkt eingebracht werden, dass es auf den Mittelbereich von einer oder beiden Oberflächen einer zuvor im Fallschacht gebildeten Primärbahn aufgetragen und dann nach einer Pendelablage im Kemabschnitt mit vergrößerter Konzentration gegenüber den Außenseitenabschnitten vorliegt. Alternativ ist es gemäß der EP 1 086 055 B1 auch möglich, das flammhemmende Additiv bereits in geeigneter Weise in einer speziellen Zone im Fallschacht bei der Faserherstellung zuzugeben. Allen diesen Verfahrensweisen ist gemeinsam, dass sich das Additivmaterial gleichmäßig über die gesamte Plattenfläche im Kernabschnitt verteilt.

Das somit gebildete Brandschutzvlies wird anschließend ausgehärtet und zu Brandschutzplatten zugeschnitten. Bei der Verwendung derartiger Brandschutzplatten in Brandschutztüren oder dergleichen sind jedoch sehr oft Abmessungen erforderlich, die von den üblichen Standardmaßen abweichen. Die Platten müssen dann entsprechend speziell konfektioniert werden. Hierbei entsteht Abfall durch den Verschnitt. Dieser Abfall beschränkt sich dabei jedoch nicht nur auf das Mineralwollematerial, sondern enthält auch das flammhemmende Additivmaterial. Da dieses vergleichsweise teuer ist, hat der entstehende Verschnitt somit eine deutliche Auswirkung auf die Wirtschaftlichkeit bei der Bereitstellung derartiger Brandschutzplatten.

Darüber hinaus ist die Beanspruchung derartiger Brandschutzplatten im Einsatzfalle häufig nicht über deren gesamte Fläche hinweg konstant. Bei Brandschutztüren tritt zum Beispiel die Situation auf, dass der obere Bereich typischerweise höheren Temperaturen ausgesetzt ist als der bodennahe Bereich. Insofern ist dort auch der maßgebliche Bereich für die Bemessung der Menge des zugegebenen Brandschutzmittels in die Brandschutzplatte, um so die gewünschte feuerhemmende Wirkung zu entfalten. Im Falle der Brandschutzplatte gemäß der EP 1 086 055 B1 bedeutet dies jedoch angesichts der gleichmäßigen Verteilung des flammhemmenden Additivmaterials über die Gesamtfläche der Platte hinweg, dass der mittlere und untere Bereich der Brandschutztür überdimensioniert ist. Auch hierdurch wird somit vergleichsweise teures Brandschutzmittel unnötig verbraucht.

Aus dem Dokument GB 2 424 260 A ist schließlich eine Brandschutzplatte aus Mineralwolle mit einem Brandschutzmittel in wenigstens einem Dickenbereich der Brandschutzplatte bekannt geworden, wobei das Brandschutzmittel in Nestern enthalten ist. Die vorliegende Erfndung geht von diesem Stand der Technik aus.

Der Erfindung liegt daher die Aufgabe zugrunde, eine Brandschutzplatte zu schaffen, bei der das kostenträchtige Brandschutzmittel nur in dem tatsächlich erforderlichen Umfang eingesetzt wird und welche somit kostengünstig bereitstellbar ist. Darüber hinaus soll erfindungsgemäß auch ein Verfahren zur Herstellung einer derartigen Brandschutzplatte geschaffen werden.

Diese Aufgabe wird durch eine Brandschutzplatte mit den Merkmalen des Anspruches 1 gelöst. Diese zeichnet sich insbesondere dadurch aus, dass die Nestern in unterschiedlichen Flächenbereichen der Brandschutzplatte mit unterschiedlichen Mittenabständen und/oder in unterschiedlichen Volumina angeordnet sind.

Die Erfindung sieht somit erstmals vor, ein Brandschutzmittel über die Fläche der Brandschutzplatte betrachtet nicht homogen verteilt vorzusehen, sondern eine gezielte "Dosierung" des Brandschutzmittels an den gewünschten Positionen herzustellen.

Damit lässt sich die Menge des eingesetzten Brandschutzmittels gegenüber dem Stand der Technik erheblich reduzieren. Dies wirkt sich nicht nur vorteilhaft auf die Herstellungskosten aus, sondern bewirkt auch eine deutliche Gewichtsreduzierung der Brandschutzplatte insgesamt, da das Brandschutzmittel typischerweise schwerer als das weitere Material der Brandschutzplatte ist. Hierdurch wird die Brandschutzplatte insgesamt leichter handhabbar, so dass auch eine damit versehene Brandschutztür oder dergleichen mit geringerem Aufwand installiert und bewegt werden kann. Beispielsweise ist es so unter Umständen möglich, auf einen Türschließer zu verzichten.

Darüber hinaus lässt es sich erfindungsgemäß zuverlässig vermeiden, das Brandschutzmittel in dem Bereich des anorganischen porösen Materials eingebracht ist, welcher im Zuge der Konfektionierung der Brandschutzplatte als Verschnitt wegfällt. Der hierbei entstehende Abfall ist somit sortenrein auf das anorganische Material ausgelegt und kann mit geringerem Aufwand wieder verwertet oder entsorgt werden. Gleichzeitig entfallen erfindungsgemäß die Kosten für das somit nicht im Verschnitt vorliegende Brandschutzmittel, wodurch die Herstellung der Brandschutzplatte kostengünstiger als im Stand der Technik erfolgen kann.

Darüber hinaus haben praktische Versuche ergeben, dass die Ausbildung der erfindungsgemäß vorgesehenen Nester mit Brandschutzmittel eine überraschend effektive flammhemmende Wirkung entfalten. Es hat sich gezeigt, dass das in den Nestern vorhandene Brandschutzmittel im Brandversuch nur deutlich verlangsamt aufgebraucht wurde im Vergleich zu einem homogen über die gesamte Fläche verteilten Brandschutzmittel wie in der EP 1 086 55 B1. Dies liegt offensichtlich darin, dass derartige Nester ein vorteilhaftes Verhältnis von der Oberfläche zum Volumen haben. Hieraus ergibt sich gegenüber dem Stand der Technik eine verbesserte Nutzungszeit des Brandschutzmittels und damit eine optimierte Ausnutzung dieses Mittels. Dementsprechend reicht im Rahmen der Erfindung eine vergleichsweise geringe Menge an Brandschutzmittel aus, um eine dem Stand der Technik vergleichbare Feuerwiderstandsklasse zu erzielen. Dies wirkt sich wiederum vorteilhaft im Hinblick auf ein geringes Gesamtgewicht der Brandschutzplatte sowie auch auf den Kostenaufwand für die verwendete Menge an Brandschutzmittel aus.

Eine weitere Optimierung der Brandschutzwirkung einhergehend mit einer Minimierung der Menge an verwendetem Brandschutzmittel lässt sich erfindungsgemäß zudem dadurch erzielen, dass die Abstände der Nester zueinander und/oder das Volumen bzw. Speichervolumen derselben je nach Anwendungsfall in geeigneter Weise eingestellt wird. Erfindungsgemäß lässt sich somit eine für den speziellen Anwendungsfall optimierte Brandschutzplatte bereitstellen.

Diese und weitere Vorteile der vorliegenden Erfindung lassen sich besonderes deutlich am Beispiel einer Brandschutztür veranschaulichen. Herkömmliche Brandschutzeinlagen für Brandschutztüren weisen eine homogene Verteilung des Brandschutzmittels über die gesamte Türfläche hinweg auf, weshalb hier im Brandfalle häufig ein sogenannter Bi-Metall-Effekt auftritt. Dabei biegt sich das Türblatt zunehmend in eine Richtung durch, da es sich auf der Feuerseite erheblich erwärmt, während die andere Seite aufgrund der feuerhemmenden Wirkung der Brandschutzplatte relativ kalt bleibt. Dieser Temperaturunterschied führt zu unterschiedlichen Längendehnungen im Material, welche nur durch eine Durchbiegung aufgenommen werden können. Hierdurch können spaltförmige Öffnungen zwischen dem Türblatt und dem Türrahmen entstehen, durch welche ein Gasdurchtritt möglich wird. Damit wird eine unmittelbare Übertragung der Wärme auf die dem Brandherd abgewandte Seite der Tür möglich und die Brandschutztür versagt vorzeitig. Da die größte Wärmeentwicklung zumeist am oberen Ende des Türblatts auftritt, das untere Ende jedoch in gleicher Weise gedämmt ist, verstärkt sich dieser Effekt noch weiter, da hier auch am unteren Ende der Tür ein erheblicher Temperaturunterschied auf beiden Seiten des Türblatts entsteht, obwohl dort in der Regel erst später eine kritische Temperatur erreicht wird.

Wird eine Brandschutztür dagegen mit einer erfindungsgemäßen Brandschutzplatte versehen, so lässt sich die Verteilung des Brandschutzmittels gezielt so steuern, dass im oberen Bereich des Türblatts eine größere Menge als am unteren Ende vorhanden ist. Dann ist die Dämmwirkung am unteren Ende der Brandschutztür geringer als im Stand der Technik, weshalb sich hier ein verringerter Temperaturunterschied an den beiden Seiten der Brandschutzplatte ergibt. Dementsprechend ist hier der unerwünschte Bi-Metall-Effekt bzw. die hieraus resultierende Durchbiegung gegenüber einer herkömmlichen Brandschutztür reduziert.

Vorteilhafte Weiterbildungen der erfindungsgemäßen Brandschutzplatte sind Gegenstand der abhängigen Ansprüche 2 bis 7.

So können die Nester mit dem Brandschutzmittel in einem mittigen Dickenbereich der Platte angeordnet sein. Diese Ausgestaltungsweise ist insbesondere dann von Vorteil, wenn der Brandherd von beiden Seiten der Brandschutzplatte angreifen kann. Dann stellt die erfindungsgemäße Brandschutzplatte unabhängig von der Seite des Brandherdes die gleiche zuverlässige Brandschutzwirkung her. Darüber hinaus bleiben die Oberflächenbereiche des anorganischen porösen Materials in ihren speziellen Eigenschaften unbeeinträchtigt durch das in den Nestern enthaltene Brandschutzmittel.

Von weiterem Vorteil ist es, wenn die Nester in einem Abstand zueinander angeordnet sind, der zwischen 15 mm und 150 mm (Mittenabstand) beträgt. Damit wird einerseits erreicht, dass die einzelnen Brandschutzmittel-Nester in der erfindungsgemäßen Weise unabhängig voneinander im Brandfalle zur Wirkung kommen, und andererseits jedoch noch hinreichend nah zueinander vorliegen, um der Brandschutzplatte insgesamt die erforderliche Feuerwiderstandsfähigkeit zu verleihen. Dabei lässt sich beispielsweise bei gleichbleibender Menge an Brandschutzmittel alleine durch die Wahl des Mittenabstands der Nester zueinander jede gewünschte Feuerwiderstandsklasse einstellen. In praktischen Versuchen hat sich gezeigt, dass für die häufigsten Anwendungsfälle ein Mittenabstand der Nester zueinander zwischen 30 mm und 80 mm und insbesondere zwischen 30 mm und 40 mm zu bevorzugen ist.

Ferner ist es auch möglich, dass die Nester ein Volumen zwischen 2 ml und 50 ml aufweisen. Hier hat sich gezeigt, dass ein Speichervolumen an Brandschutzmittel innerhalb dieses Bereichs eine hinreichende Brandschutzwirkung für die üblichen Anwendungsfälle ermöglicht. Dabei lässt sich durch das Volumen der Nester eine gewünschte Feuerwiderstandsklasse gezielt einstellen. Für die häufigsten Anwendungsfälle hat sich ein Speichervolumen an Brandschutzmittel in den Nestern zwischen 5 ml und 20 ml als besonders geeignet erwiesen.

Von weiterem Vorteil ist es, wenn die Nester eine im Wesentlichen kugelförmige Gestalt aufweisen. Sie weisen dann ein optimiertes Verhältnis ihrer Oberfläche bezogen auf das vorhandene Volumen, d. h. eine besonders günstige Geometrie, auf. Das Brandschutzmittel kann dann seine Wirkung besonders effektiv zur Geltung bringen. Ferner speichern derartige Nester dann das Brandschutzmittel besonders lange, d. h. die Wirkung des Brandschutzmittels erfolgt über einen besonders fangen Zeitraum hinweg. Damit lässt sich eine besonders gute Feuerwiderstandsklasse erreichen.

Dabei kann das Brandschutzmittel einen unter Wärmeeinwirkung wasserabspaltenden Stoff wie insbesondere Aluminiumhydroxid oder Magnesiumhydroxid enthalten. Diese Stoffe haben sich in der Praxis besonders für Brandschutzzwecke bewährt und können zudem verfahrenstechnisch mit relativ geringem Aufwand in Form von Nestern innerhalb der Platte bereitgestellt werden.

Das Brandschutzmittel kann ferner zumindest in Teilflächenbereichen der Platte ein unter Wärmeeinwirkung aufschäumendes Additiv aufweisen. Damit lässt sich das Volumen der Brandschutzplatte zum Beispiel innerhalb einer Brandschutztür im Brandfalle wirksam vergrößern, so dass ein unkontrolliertes Umherströmen von Heißgasen im Türkasten verhindert wird. Der Wärmeübergang von Seiten des Brandherdes auf die andere Seite der Brandschutztür oder dergleichen wird somit besonders wirksam beschränkt. Dies wirkt sich vorteilhaft auf die Brandschutzwirkung der Anordnung aus. Bevorzugt liegt das aufschäumende Additiv dabei benachbart zu Seitenrandabschnitten der Platte vor, da hier im Brandfalle aufgrund von Formänderungen bzw. Durchbiegungen der Platte besonders mit Freiräumen zu rechnen ist, durch welche derartige Heißgase strömen könnten. Mittels der aufschäumenden Additive lässt sich somit eine besonders zuverlässige Brandschutzwirkung der Brandschutzplatte erreichen.

Gemäß einem weiteren Aspekt der vorliegenden Erfindung wird nach Anspruch 8 ein Verfahren zur Herstellung einer Brandschutzplatte, insbesondere der erfindungsgemäßen Brandschutzplatte, geschaffen. Dieses weist die Verfahrensschritte auf: Bereitstellen einer Roh-Platte aus anorganischem porösem Material, Bereitstellen eines Brandschutzmittels in flüssiger Form, insbesondere in Form einer Suspension, Bereitstellen wenigstens einer Injektionseinrichtung für das Brandschutzmittel, Einführen der wenigstens einen Injektionseinrichtung in die Roh-Platte bis in eine Eindringtiefe entsprechend wenigstens einem vorbestimmten Dickenbereich der Roh-Platte, Einbringen des Brandschutzmittels durch Injektion in den wenigstens einen Dickenbereich der Roh-Platte derart, dass das Brandschutzmittel in Nestern enthalten ist, die in unterschiedlichen Flächenbereichen der Roh-Platte mit unterschiedlichen Abständen und/oder in unterschiedlichen Volumina angeordnet sind, und Herausbewegen der wenigstens einen Injektionseinrichtung aus der Roh-Platte nach Abschluss des Eindringschrittes.

Das erfindungsgemäße Verfahren erlaubt dabei die Herstellung der gewünschten Nester an den vorbestimmten Stellen bzw. mit dem gewünschten Speichervolumen und damit die Herstellung der erfindungsgemäßen Brandschutzplatte. Im Gegensatz zum Stand der Technik wird das Brandschutzmittel somit erfindungsgemäß nicht im Zuge der Herstellung der Roh-Platte aus anorganischem porösem Material eingebracht, wie dies zum Beispiel im Rahmen der EP 1 086 055 B1 der Fall ist, sondern gezielt an vorbestimmten Stellen mittels einer Injektionseinrichtung in diese vorgefertigte Roh-Platte eingebracht. Damit lässt sich mit geringem verfahrenstechnischem Aufwand eine Minimierung der Menge an erforderlichem Brandschutzmittel erzielen, was sich vorteilhaft im Hinblick auf ein besonders geringes Gewicht der somit hergestellten Brandschutzplatte auswirkt. Zudem kann eine mögliche Verschwendung des Brandschutzmittels dadurch erfindungsgemäß wirksam vermieden werden, dass dieses gezielt nicht in Bereiche eingebracht wird, welche bei der Konfektionierung der Brandschutzplatte für den Einsatz beispielsweise an einer Brandschutztür als Verschnitt wegfallen. Ferner vereinfacht sich somit der Herstellungsprozess für die Roh-Platte wesentlich gegenüber dem Stand der Technik, da hier auf den Prozessschritt des Brandschutzmitteleintrags verzichtet werden kann.

Hierbei ist es zwar grundsätzlich bereits bekannt geworden, ein Additiv mittels Hohlnadeln in eine Mineralwolleplatte einzubringen. Hier ist beispielsweise auf die DE 42 22 207 C2 und die DE 199 19 004 A1 zu verweisen, welche ein Mineralwollevlies im Zuge der Herstellung einem Nadelungsvorgang unterziehen, um so eine Verfilzung und Verdichtung der oberflächennahen Bereiche zu erreichen. Damit lassen sich hohe Abreißfestigkeiten erzielen. Hierbei wird durch hohl ausgebildete Nadeln der Nadeleinrichtung ein Verstärkungsmittel in den Oberflächenbereich eingebracht, um eine harte und druckfeste Oberflächenschicht herzustellen. Dabei können diese Additive nach dem anschließenden Aushärten gewissermaßen wie kleine Stempel wirken. Sie können zudem auch bis in die nicht vernadelte Mineralfaserschicht hinein eingebracht werden, um dort eine zusätzliche Verankerung der einzelnen Schichten untereinander herzustellen.

Den in der DE 42 22 207 C2 und der DE 199 19 004 A1 offenbarten Verfahrensweisen ist dabei gemeinsam, das sie den Eintrag der Verstärkungsadditive im Zuge der kontinuierlichen Fertigung des Mineralwollevlieses vorsehen und damit eine quasi homogene Verteilung des Verstärkungsadditives über die Gesamtfläche des Mineralwollevlieses hinweg erzielen. Mit anderen Worten ist es somit im Rahmen dieser Schriften nicht möglich, das Additiv in unterschiedlichen Abständen und/oder in unterschiedlichen Volumeneinheiten in das Mineralwollevlies einzubringen. Dies ist auch dadurch bedingt, dass der Eintrag der Additive hier systemgemäß zwangsläufig vor dem Härteofen erfolgen muss, damit die als Verstärkungsmittel wirkenden Additive gemeinsam mit dem bereits zuvor den Fasern beigegebenen Bindemittel im Härteofen aushärten. Im Übrigen betreffen diese Schriften keine Brandschutzplatte und das zugegebene Additiv ist kein Brandschutzmittel.

Im Gegensatz hierzu wird erfindungsgemäß durch das gezielte Einbringen des Brandschutzmittels in die vorgefertigte Roh-Platte aus anorganischem porösem Material eine Brandschutzplatte erzielt, welche sich durch die oben dargelegten besonderen Vorteile vom Stand der Technik deutlich abhebt.

Vorteilhafte Weiterbildungen des erfindungsgemäßen Verfahrens sind Gegenstand der abhängigen Ansprüche 9 und 10.

So kann die Eindringtiefe der wenigstens einen Injektionseinrichtung während der Injektion verändert werden. Dies hat den Vorteil, dass damit die geometrische Gestalt der Nester gesteuert werden kann. Die erfindungsgemäß eingesetzten Roh-Platten aus anorganischem porösem Material weisen häufig eine Lagenstruktur auf, wie dies insbesondere bei Mineralwolleplatten der Fall ist. Dort sind die einzelnen Fasern laminar ausgerichtet, d. h. sie liegen weitestgehend parallel zu den große Oberflächen der Platte vor und bilden Laminarbereiche bzw. die Lagenstruktur. Wird nun die Eindringtiefe der wenigstens einen Injektionseinrichtung während der Einbringung des Brandschutzmittels verändert, so kann das Brandschutzmittel gezielt in die einzelnen Lagen der Roh-Platte dosiert eingebracht werden. Innerhalb einer Lage erfolgt die Verteilung des Brandschutzmittels aufgrund der Lagenstruktur dabei mit geringerem Widerstand, als von einer Lage in die benachbarte Lage. Die Veränderung der Eindringtiefe im Zuge des Einbringschrittes erlaubt somit beispielsweise die Herstellung von Nestern mit einer im Wesentlichen kugelförmigen Gestalt selbst dann, wenn die Roh-Platte die angesprochene Lagenstruktur aufweist. Die Eindringtiefe kann dabei auch durch eine Hin- und Herbewegung der Injektionseinrichtung wiederholt verändert werden, um so eine optimale Verteilung des Bindemittels im Bereich des gewünschten Nestes herzustellen. Darüber hinaus hat es sich in praktischen Versuchen auch als vorteilhaft erwiesen, wenn die Injektionseinrichtung zunächst etwas tiefer in die Roh-Platte eindringt, als es für die Einbringung des Brandschutzmittels erforderlich wäre, und sich dann ein Stück zurückzieht, um eine Verstopfung an der Spitze der Injektionseinrichtung zu vermeiden. Auch hierdurch wird somit eine Verbesserung des erfindungsgemäßen Verfahrens erreicht.

Ferner können auch mehrere Injektionseinrichtungen zum Einbringen des Brandschutzmittels eingesetzt werden. Dann lassen sich eine Mehrzahl an Nestern in einem Zuge herstellen. Der Zeitaufwand für die Durchführung des erfindungsgemäßen Verfahrens lässt sich somit drastisch reduzieren. Diese Mehrzahl an Injektionseinrichtungen kann dabei vorzugsweise selektiv mit Brandschutzmittel versorgt werden, so dass es möglich ist, das Speichervolumen in den einzelnen hergestellten Nestern unterschiedlich auszugestalten. Darüber hinaus ist es beispielsweise auch möglich, einzelne Injektionseinrichtungen überhaupt nicht mit Brandschutzmittel zu versorgen und so die Abstände zwischen den Nestern einzustellen. Hieraus folgt, dass mehrere Injektionseinrichtungen beispielsweise nach Art eines Nadelkissens auf die Roh-Platte einwirken können, dabei jedoch ein dem Anwendungsfall angepasstes spezielles Muster an mit Brandschutzmittel gefüllten Nestern hergestellt wird.

Eine Vorrichtung zur Herstellung einer erfindungsgemäßen Brandschutzplatte enthält ein Auflageelement, auf dem eine Roh-Platte aus anorganischem porösem Material auflegbar ist, eine Hubeinheit, an welcher wenigstens eine Injektionseinrichtung für die Einbringung eines Brandschutzmittels durch Injektion in die Roh-Platte hubbeweglich angeordnet ist, eine Steuereinheit zur Steuerung der Hubbewegung für wenigstens eine Injektionseinrichtung, und einen Vorratsbehälter für das Brandschutzmittel mit einem Befüllungssystem für die wenigstens eine Injektionseinrichtung.

Mit einer derartigen Vorrichtung lässt sich die erfindungsgemäße Brandschutzplatte besonders vorteilhaft herstellen. Sie eignet sich zudem zur Durchführung des oben erläuterten erfindungs gemäßen Verfahrens.

Ferner kann die Hubeinheit mehrere Injektionseinrichtungen zur gleichzeitigen Bearbeitung eines Flächenbereichs der Roh-Platte aufweisen, wobei dieser Flächenbereich eine Teilfläche oder die gesamte Oberfläche der Roh-Platte ist. Damit lässt sich eine besonders effektive Herstellung der Brandschutzplatte erreichen, wobei durch die Wahl des hiermit bearbeiteten Flächenbereichs der Roh-Platte eine besonders gute Anpassung an den jeweiligen Anwendungsfall der zu schaffenden Brandschutzplatte möglich ist. Wenn durch die Mehrzahl an Injektionseinrichtungen die gesamte Oberfläche der Roh-Platte in einem Zuge bearbeitet wird, lässt sich der Herstellungsvorgang besonders schnell durchführen. Wird dagegen nur eine Teilfläche der Roh-Platte bearbeitet, so ist eine selektive Auswahl und Positionierung der Nester mit Brandschutzmittel möglich.

Von weiterem Vorteil ist es, wenn das Befüllungssystem eine Dosiereinrichtung zur Einstellung der Menge des zugeführten Brandschutzmittels für die wenigstens eine Injektionseinrichtung aufweist. Dann lässt sich das Speichervolumen innerhalb des jeweils gebildeten Nestes exakt einstellen, wodurch insgesamt die Eigenschaften der hergestellten Brandschutzplatte selektiv ausgestaltet werden können.

Die Erfindung wird nachfolgend in Ausführungsbeispielen anhand der Figuren der Zeichnung näher erläutert. Es zeigt:
- Fig. 1: eine Draufsicht auf eine erfindungsgemäße Brandschutzplatte;
- Fig. 2: eine perspektivische Ansicht der erfindungsgemäßen Brandschutzplatte, welche gemäß der in Fig. 1 angedeuteten Schnittlinien A-A und B-B geschnitten ist;
- Fig. 3: eine Seitenansicht der erfindungsgemäßen Brandschutzplatte mit Blick auf die Schnittfläche A-A;
- Fig. 4: eine Vorrichtung gemäß einer ersten Ausführungsform; und
- Fig. 5: eine Vorrichtung gemäß einer zweiten Ausführungsform.

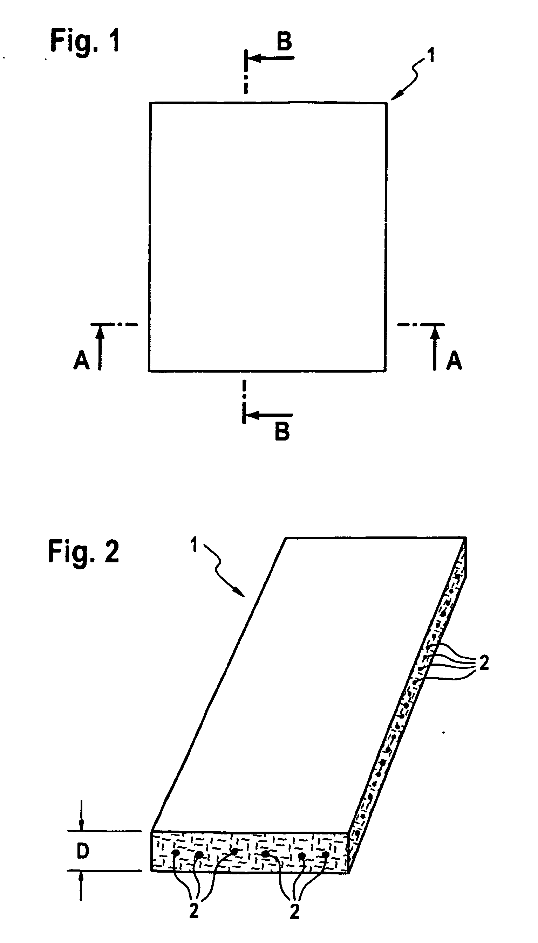

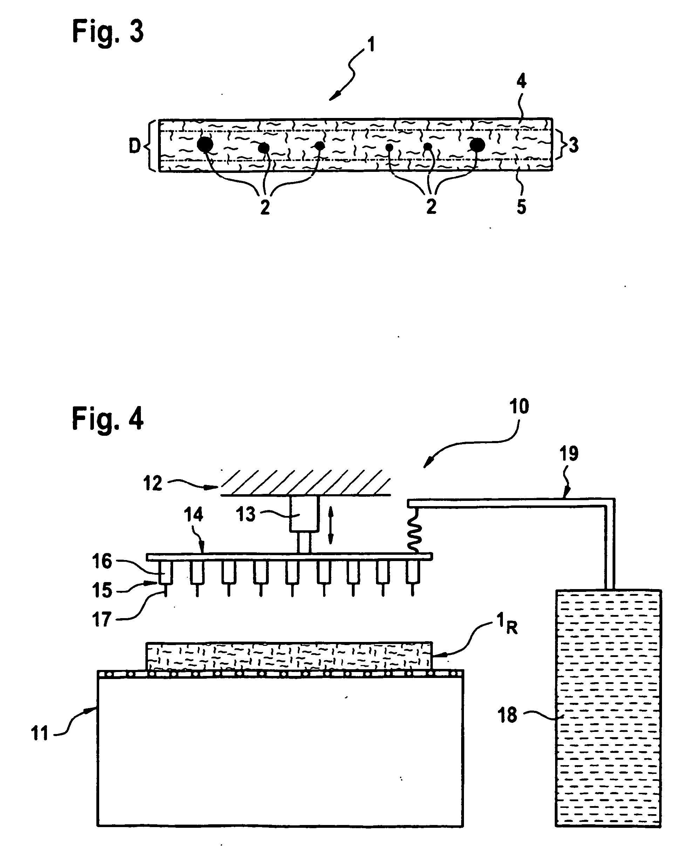

Gemäß der Darstellung in den Figuren 1 und 2 ist eine Brandschutzplatte 1 im Wesentlichen quaderförmig ausgebildet. Sie weist hierzu zwei zueinander parallele Großflächen auf, welche hier die obere und untere Fläche der Brandschutzplatte 1 darstellen. Darüber hinaus weist sie vier Seitenflächen auf, welche die beiden Großflächen miteinander verbinden und sich über eine Dicke D der Platte hinweg erstrecken. Die Brandschutzplatte 1 besteht im Wesentlichen aus gebundener laminarer Mineralwolle, in welche diskrete und voneinander beabstandete Nester 2 aus Brandschutzmittel eingebracht sind. Diese sind in den Figuren 2 und 3 erkennbar, welche die Schnittflächen A-A bzw. B-B zeigen. Die Nester 2 sind im gezeigten Beispiel über die gesamte Brandschutzplatte hinweg verteilt, wobei in Figur 2 in der Längserstreckung zur Vereinfachung nur einige Nester 2 mit Bezugszeichen versehen sind.

Wie insbesondere aus Figur 3 erkennbar ist, sind die Nester 2 in einem bestimmten Dickenbereich der Brandschutzplatte, nämlich einem Kernbereich 3 konzentriert. In benachbarten, den Großflächen zugewandten Randbereichen 4 und 5 liegen dagegen keine Nester 2 vor.

Unter einem Nest 2 ist hier eine Ansammlung des Brandschutzmittels in Form eines zusammenhängenden Klumpens oder dergleichen zu verstehen. Diese Brandschutzmittel-Nester 2 liegen dabei gemäß der Darstellung in den Figuren 2 und 3 ungleichmäßig verteilt in der Brandschutzplatte 1 vor. So sind die Mittenabstände der Nester 2 zueinander in unterschiedlichen Flächenbereichen der Brandschutzplatte 1 unterschiedlich gewählt. Darüber hinaus weisen die Nester 2 im vorliegenden Ausführungsbeispiel auch unterschiedliche Volumen an Brandschutzmittel auf. Gemäß Figur 3 sind die Nester 2 beispielsweise großvolumiger in den Bereichen ausgebildet, welche den Seitenrändern der Brandschutzplatte 1 benachbart sind gegenüber jenen Nestern 2 im Zentrum der Brandschutzplatte 1. Die Nester 2 weisen dabei eine im Wesentlichen kugelförmige Gestalt auf.

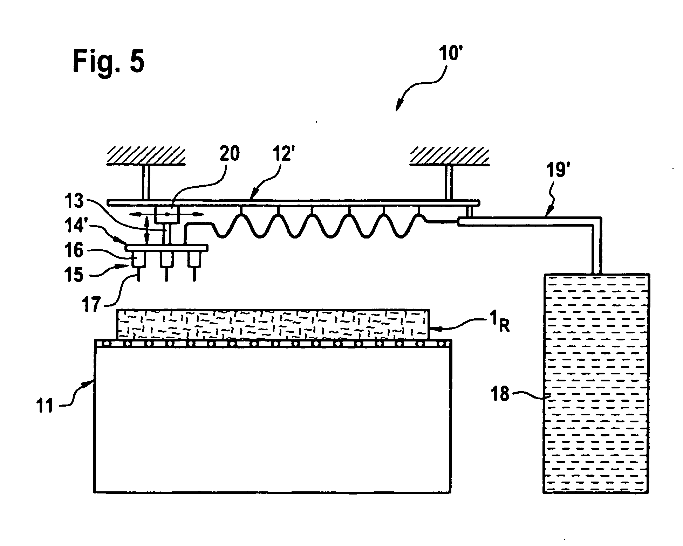

In den Figuren 4 und 5 sind Vorrichtungen 10 bzw. 10' für die Herstellung der Brandschutzplatte 1 gezeigt.

Gemäß der Darstellung in Figur 4 weist die Vorrichtung 10 ein Auflageelement 11 in Gestalt eines Auflagetisches mit einer darauf angeordneten Transportbahn auf, worauf eine als Roh-Platte 1_{R} dienende, vorgefertigte und gebundene Mineralwolleplatte aufgelegt ist.

Die Vorrichtung 10 enthält ferner ein Deckenportal 12, an dem über eine Hubeinrichtung 13 ein Injektionsmodul 14 gehalten ist. Das Injektionsmodul 14 ist mittels der Hubeinrichtung 3 höhenverstellbar. Am Injektionsmodul 14 ist eine Mehrzahl von Injektionseinrichtungen 15 angeordnet, welche auf die Mineralwolleplatte zuweisen. Die Injektionseinrichtungen 15 weisen jeweils einen Pufferspeicher 16 für das Brandschutzmittel sowie eine Injektionsnadel 17 auf. Mit dieser wird eine definierte Menge an Brandschutzmittel in die Mineralwolleplatte eingebracht. Hierzu wird das Injektionsmodul 14 insgesamt mittels der Hubeinrichtung 13 derart abgesenkt, dass die Injektionsnadeln 17 um ein vorbestimmtes Maß in die Roh-Platte 1_{R} eindringen und dort in einem vorbestimmten Dickenbereich das Brandschutzmittel einspritzen bzw. die Roh-Platte damit impfen. Hierbei werden die Nester 2 ausgebildet. Das Brandschutzmittel wird aus einem Vorratsbehälter 18 über ein Befüllungssystem 19 zum Injektionsmodul 14 zugeführt.

Figur 5 zeigt eine abgewandelte Ausführungsform in Gestalt der Vorrichtung 10'. Soweit Bestandteile identisch mit jenen der Vorrichtung 10 gemäß Figur 4 sind, sind sie hierbei mit den gleichen Bezugszeichen versehen.

Die Vorrichtung 10' gemäß Figur 5 unterscheidet sich von jener in Figur 4 darin, dass ein Injektionsmodul 14' geringere Abmessungen aufweist, so dass hiermit nur eine Teilfläche der Roh-Platte 1_{R} bearbeitet werden kann. Hierzu ergänzend weist die Vorrichtung 10' eine Linearverschiebeeinrichtung 20 auf, mittels der ein hier abgehängtes Deckenportal 12' das Injektionsmodul 14' linear verschiebbar trägt. Das Injektionsmodul 14' ist somit horizontal verschiebbar am Deckenportal 12' gelagert, so dass es an jeder beliebigen Teilfläche der auf dem Auflageelement 11 vorliegenden Mineralwolleplatte einwirken kann. Die Zuführung des Brandschutzmittels erfolgt hier über ein dementsprechend modifiziertes Befüllungssystem 19'.

Das Brandschutzmittel wird dabei in beiden Ausführungsformen in flüssiger Form bereitgestellt und über das Injektionsmodul 14 in die Mineralwolleplatte eingebracht. Je nach Art des Brandschutzmittels ist dieses entsprechend bereitzustellen. Wird beispielsweise Aluminiumhydroxid als Brandschutzmittel eingesetzt, so liegt dieses an sich in pulveriger Form bzw. als festes teilchenförmiges Material vor und wird für den erfindungsgemäßen Anwendungsfall mit einer Flüssigkeit zur Suspension aufbereitet, die dann eingespritzt werden kann.

Die in der Suspension enthaltene Flüssigkeit bzw. bei einem anderen Brandschutzmittel ohnehin enthaltene Flüssigkeit verflüchtigt sich dann typischerweise in absehbarer Zeit, so dass das Brandschutzmittel in der Regel in trockener Form in der Brandschutzplatte 1 vorliegt, wenn diese den Einsatzort erreicht.

Die Injektionsnadeln 17 sind so ausgebildet, dass sie ein schnelles und verstopfungsfreies Einspritzen des Brandschutzmittels ermöglichen, wobei die verwendeten Nadeln typischerweise einen Innendurchmesser zwischen 1 mm und 4 mm aufweisen.

Die Brandschutzelemente 1 sind in der Regel zwischen 25 mm und 200 mm dick, wobei zumeist bei Brandschutztüren ein Maß zwischen 40 mm und 120 mm zum Einsatz kommt.

Bei Brandversuchen in der T60- und T90-Klassifizierung haben sich Brandschutzmittel-Nester mit einem Volumeninhalt von 5 ml bis 20 ml im Abstand von 30 mm bis 80 mm als vorteilhaft erwiesen.

Das Einspritzen eines derartigen Brandschutzmittels beispielsweise in eine Mineralwollplatte beeinträchtigt dabei nicht die Oberflächenstruktur der Mineralwolleplatte, so dass deren physikalisches Verhalten unverändert bleibt, Formänderungen innerhalb der Platte aufgenommen werden und sich nicht nach außen an den Großflächen auswirken.

Die Erfindung lässt neben den erläuterten Ausführungsformen weitere Gestaltungsansätze zu.

So kann für die Roh-Platte 1_{R} an sich jede Art von faserigem anorganischem Material eingesetzt werden, wie insbesondere Stein-, Glas- oder Schlackenwolle. Ferner ist es auch möglich, die Roh-Platte 1_{R} für die erfindungsgemäße Brandschutzplatte 1 aus einem anderen Werkstoff herzustellen. So können die Nester 2 beispielsweise auch in Gasbetonplatten, Blähtonplatten, Gipsplatten oder dergleichen ausgebildet werden.

Überdies ist unter der Plattenform der Brandschutzplatte 1 im Prinzip jede im Wesentlichen flächige Gestalt zu verstehen. Diese muss nicht notwendigerweise quaderförmig sein. Ferner kann das Material auch relativ weich im Sinne einer Matte oder eines Vlieses bereitgestellt werden. Für besondere Anwendungsfälle sind auch gekrümmte Formen möglich.

Ferner ist auch nicht erforderlich, dass das Brandschutzmittel in einem mittigen Dickenbereich der Platte angeordnet wird. In anderen Ausführungen können die Nester mit dem Brandschutzmittel auch beispielsweise in einem oder beiden Randbereichen 4 bzw. 5 vorgesehen sein. Dann kommt das Brandschutzmittel relativ bald nach der Beaufschlagung der Brandschutzplatte mit Wärmeenergie zur Wirkung. Darüber hinaus ist es auch möglich, die Nester mit dem Brandschutzmittel in mehr als einem Dickenbereich der Platte vorzusehen, wobei dies bevorzugt in Brandschutzplatten mit größeren Dicken der Fall ist.

Der Mittenabstand der Nester liegt typischerweise zwischen 15 mm und 150 mm. In besonderen Anwendungsfällen kann jedoch auch in geringerer oder ein über 150 mm hinausgehender Abstand der Nester gewählt werden. Zudem ist es auch nicht erforderlich, dass der Mittenabstand von einem Nest zum anderen über die Brandschutzplatte hinweg gleich ist.

Ebenso kann auch das Volumen der Nester andere Werte als die angegebenen 2 ml bis 50 ml aufweisen. Für besondere Einsatzfälle können so beispielsweise auch deutlich größere Mengen an Brandschutzmittel eingebracht werden.

Die Nester 2 weisen bevorzugt eine im Wesentlichen kugelförmige Gestalt auf, wobei dies jedoch nicht zwingend erforderlich ist. Hier kann sich auch eine im Wesentlichen eiförmige Gestalt oder eine andere unförmige Klumpengestalt bei der Herstellung der Brandschutzplatte ausbilden. In praktischen Versuchen hat sich jedoch gezeigt, dass im Wesentlichen kugelförmige Nester das Brandschutzmittel langsamer und dosierter abgeben als flache oder längliche Geometrien, welche das Mittel in relativ kurzer Zeit hochdosiert abgeben.

Als Brandschutzmittel kann auch ein anderes Hydroxid als die beiden genannten, oder ein anderes flammhemmendes Mittel zum Einsatz kommen.

Ferner kann dem Brandschutzmittel alternativ auch ein unter Wärmeeinwirkung aufschäumendes Mittel zugegeben sein, welches im Brandfalle zum Verschluss möglicher Freiräume dient, um einen unerwünschten Gasdurchtritt von heißen Gasströmen zu verhindern. Auch andere spezielle Additive können zum Brandschutzmittel zugegeben sein.

Im Hinblick auf das Verfahren ist es bevorzugt vorgesehen, dass die Eindringtiefe der Injektionseinrichtungen 15 im Zuge des Einbringschrittes verändert wird; dies ist jedoch nicht erforderlich. Im Prinzip reicht es aus, die Injektionsnadeln 17 um ein vorbestimmtes Maß in die Roh-Platte 1_{R} einzuführen und dann in einem Zuge das Brandschutzmittel einzuspritzen.

Darüber hinaus ist es auch möglich, die Anzahl der Injektionseinrichtungen 15 je nach Einsatzzweck auszuwählen. Im einfachsten Falle kann die Injektionseinrichtung 15 auch als Einzelelement eingesetzt werden, während gerade bei großformatigen Brandschutzplatten durchaus auch dutzende von Injektionseinrichtungen 15 an einem Injektionsmodul 14 angeordnet sein können.

Im Ausführungsbeispiel gemäß Figur 5 kann die Vorrichtung 10' beispielsweise dazu genutzt werden, nur einen Teilbereich der Brandschutzplatte 1 mit Nestern mit Brandschutzmittel zu versehen. Alternativ ist es jedoch auch möglich, einzelne Teilflächen der Brandschutzplatte 1 mit einer größeren flammhemmenden Wirkung dadurch auszustatten, dass dort das Injektionsmodul 14 mehr und damit näher beisammen liegende Nester mit Brandschutzmittel als in anderen Bereichen ausbildet, und/oder dass die Menge des zugeführten Brandschutzmittels und damit das Volumen der Nester in Teilflächen der Brandschutzplatte 1 größer als in anderen ausgebildet sind.

Darüber hinaus ist es auch möglich, dass die Brandschutzplatte 1 während des Einspritzverfahrens auf einer Transportbahn bewegt wird und sich das Injektionsmodul 14 mit dem Deckenportal 12 in der gleichen Geschwindigkeit über der Platte 1 bewegt. Auch dann ist es möglich, das Brandschutzmittel zuverlässig und in geeigneter Weise in das Mineralwollevlies einzubringen.

Die erfindungsgemäße Brandschutzplatte 1 lässt sich dabei nicht nur als Einlage für Brandschutztüren oder -tore einsetzen, sondern kann auch in feststehenden Wandelementen in Gebäuden, Schiffen oder dergleichen, oder auch an technischen Anlagen, etc., eingesetzt werden.

## Patentansprüche

1. Brandschutzplatte (1), insbesondere als Einlage für Brandschutztüren oder -tore, aus anorganischem porösem Material, insbesondere Mineralwolle, mit einem Brandschutzmittel in wenigstens einem Dickenbereich der Brandschutzplatte (1), wobei das Brandschutzmittel in Nestern (2) enthalten ist,
**dadurch gekennzeichnet,**
**dass** die Nester (2) in unterschiedlichen Flächenbereichen der Brandschutzplatte (1) mit unterschiedlichen Mittenabständen und/oder in unterschiedlichen Volumina angeordnet sind.

2. Brandschutzplatte nach Anspruch 1, **dadurch gekennzeichnet, dass** die Nester (2) mit dem Brandschutzmittel in einem mittigen Dickenbereich der Brandschutzplatte (1) angeordnet sind.

3. Brandschutzplatte nach Anspruch 1 oder 2, **dadurch gekennzeichnet, dass** die Mitten der Nester (2) in einem Abstand zueinander angeordnet sind, der zwischen 15 mm und 150 mm, vorzugsweise zwischen 30 mm und 80 mm und insbesondere zwischen 30 mm und 40 mm liegt.

4. Brandschutzplatte nach einem der Ansprüche 1 bis 3, **dadurch gekennzeichnet, dass** die Nester (2) ein Volumen zwischen 2 ml und 50 ml und vorzugsweise zwischen 5 ml und 20 ml aufweisen.

5. Brandschutzplatte nach einem der Ansprüche 1 bis 4, **dadurch gekennzeichnet, dass** die Nester (2) eine im Wesentlichen kugelförmige Gestalt aufweisen.

6. Brandschutzplatte nach einem der Ansprüche 1 bis 5, **dadurch gekennzeichnet, dass** das Brandschutzmittel einen unter Wärmeeinwirkung Wasser abspaltenden Stoff, insbesondere Aluminiumhydroxid oder Magnesiumhydroxid, enthält.

7. Brandschutzplatte nach einem der Ansprüche 1 bis 6, **dadurch gekennzeichnet, dass** das Brandschutzmittel zumindest in Teilflächenbereichen der Brandschutzplatte (1) ein unter Wärmeeinwirkung aufschäumendes Additiv aufweist, wobei das aufschäumende Additiv vorzugsweise benachbart zu Seitenrandabschnitten der Brandschutzplatte (1) vorliegt.

8. Verfahren zur Herstellung einer Brandschutzplatte, insbesondere der Brandschutzplatte (1) nach einem der Ansprüche 1 bis 7, mit den Schritten:
Bereitstellen einer Roh-Platte (1_{R}) aus anorganischem porösem Material,
Bereitstellen eines Brandschutzmittels in flüssiger Form, insbesondere in Form einer Suspension,
Bereitstellen wenigstens einer Injektionseinrichtung (15) für das Brandschutzmittel,
Einführen der wenigstens einen Injektionseinrichtung (15) in die Roh-Platte (1_{R}) bis in eine Eindringtiefe entsprechend wenigstens einem vorbestimmten Dickenbereich der Roh-Platte (1_{R}),
Einbringen des Brandschutzmittels durch Injektion in den wenigstens einen Dickenbereich der Roh-Platte (1_{R}) derart, dass das Brandschutzmittel in Nestern (2) enthalten ist, die in unterschiedlichen Flächenbereichen der Roh-Platte (1_{R}) mit unterschiedlichen Abständen und/oder in unterschiedlichen Volumina angeordnet sind, und
Herausbewegen der wenigstens einen Injektionseinrichtung (15) aus der Roh-Platte (1_{R}) nach Abschluss des Einbringschrittes.

9. Verfahren nach Anspruch 8, **dadurch gekennzeichnet, dass** die Eindringtiefe der wenigstens einen Injektionseinrichtung (15) während der Injektion verändert wird.

10. Verfahren nach Anspruch 8 oder 9, **dadurch gekennzeichnet, dass** mehrere Injektionseinrichtungen (15) zum Einbringen des Brandschutzmittels eingesetzt werden, wobei diese vorzugsweise selektiv mit Brandschutzmittel versorgt werden.

## Claims

1. Fire protection panel (1), in particular as an insert for fire protection doors or fire protection gates, made of an inorganic porous material, especially mineral wool, with a flame retardant in at least one thickness zone of the fire protection panel (1), wherein the flame retardant is comprised in recesses (2),
**characterised in that**,
the recesses (2) are arranged in different surface areas of the fire protection panel (1) with different centre-to-centre spacings and/or in different volumes.

2. Fire protection panel according to claim 1, **characterised in that** the recesses (2) with the flame retardant are arranged in a central thickness zone of the fire protection panel (1).

3. Fire protection panel according to claim 1 or 2, **characterised in that** the centres of the recesses (2) are arranged at a distance from one another of between 15 mm and 150 mm, preferably between 30 mm and 80 mm and particularly between 30 mm and 40 mm.

4. Fire protection panel according to one of claims 1 to 3, **characterised in that** the recesses (2) possess a volume between 2 ml and 50 ml and preferably between 5 ml and 20 ml.

5. Fire protection panel according to one of claims 1 to 4, **characterised in that** the recesses (2) are essentially spherical in shape.

6. Fire protection panel according to one of claims 1 to 5, **characterised in that** the flame retardant comprises a substance that splits off water when heated, in particular aluminium hydroxide or magnesium hydroxide.

7. Fire protection panel according to one of claims 1 to 6, **characterised in that** the flame retardant, at least in partial sections of the fire protection panel (1), possesses an additive that foams when heated, wherein the foaming additive is present preferably close to side edge sections of the fire protection panel (1).

8. Process for manufacturing a fire protection panel, in particular the fire protection panel (1) according to one of claims 1 to 7, said process having the steps:
Provide a rough panel (1_{R}) made of inorganic porous material,
Provide a flame retardant in liquid form, particularly in the form of a suspension,
Provide at least one injection device (15) for the flame retardant,
Introduce the at least one injection device (15) into the rough panel (1_{R}) up to a penetration depth that corresponds to at least a pre-determined thickness zone of the rough panel (1_{R}),
Introduce the flame retardant by injection into the at least one thickness zone of the rough panel (1_{R}), such that the flame retardant is comprised in recesses (2) that are arranged in different surface areas of the rough panel (1_{R}) with different spacings and/or in different volumes, and
Remove the at least one injection device (15) from the rough panel (1_{R}) at the conclusion of the introduction step.

9. Process according to claim 8, **characterised in that** the penetration depth of the least one injection device (15) is changed during the injection.

10. Process according to claim 8 or 9, **characterised in that** a plurality of injection devices (15) are employed for introducing the flame retardant, wherein these are preferably selectively supplied with flame retardant.

## Revendications

1. Panneau coupe-feu (1) servant en particulier d'élément rapporté pour des portes ou portails coupe-feu, en matériau poreux anorganiques, en particulier en laine minérale, avec un agent ignifuge dans au moins une zone d'épaisseur du panneau coupe-feu (1), sachant que l'agent ignifuge est contenu dans des cavités (2), **caractérisé en ce que** les cavités (2) sont disposées dans différentes zones de surface du panneau coupe-feu (1) avec différentes distances de centre à centre et/ou dans différents volumes.

2. Panneau coupe-feu selon la revendication 1, **caractérisé en ce que** les cavités (2) contenant l'agent ignifuge sont disposées dans une zone d'épaisseur médiane du panneau coupe-feu (1).

3. Panneau coupe-feu selon la revendication 1 ou 2, **caractérisé en ce que** les centres des cavités (2) sont disposés à une distance les uns des autres qui est comprise entre 15 mm et 150 mm, de préférence entre 30 mm et 80 mm et en particulier entre 30 mm et 40 mm.

4. Panneau coupe-feu selon l'une quelconque des revendications 1 à 3, **caractérisé en ce que** les cavités (2) présentent un volume compris entre 2 ml et 50 ml et de préférence entre 5 ml et 20 ml.

5. Panneau coupe-feu selon l'une quelconque des revendications 1 à 4, **caractérisé en ce que** les cavités (2) présentent une forme sensiblement sphérique.

6. Panneau coupe-feu selon l'une quelconque des revendications 1 à 5, **caractérisé en ce que** l'agent ignifuge contient une substance séparant l'eau sous l'effet de la chaleur, en particulier de l'hydroxyde d'aluminium ou de l'hydroxyde de magnésium.

7. Panneau coupe-feu selon l'une quelconque des revendications 1 à 6, **caractérisé en ce que** l'agent ignifuge présente un additif expansible sous l'effet de la chaleur au moins dans des zones de surface partielles du panneau coupe-feu (1), sachant que l'additif expansible se présente de préférence de manière contigüe aux sections de bord latérales du panneau coupe-feu (1).

8. Procédé de fabrication d'un panneau coupe-feu, en particulier du panneau coupe-feu (1) selon l'une quelconque des revendications 1 à 7, comportant les étapes suivantes :
mise à disposition d'un panneau brut (1_{R}) en matériau poreux anorganique,
mise à disposition d'un agent ignifuge sous la forme liquide, en particulier sous la forme d'une suspension,
mise à disposition d'au moins un dispositif d'injection (15) pour l'agent ignifuge,
introduction d'au moins un dispositif d'injection (15) dans le panneau brut (1_{R}) jusqu'à une profondeur de pénétration selon au moins une zone d'épaisseur prédéterminée du panneau brut (1_{R}),
introduction de l'agent ignifuge par injection dans au moins une zone d'épaisseur du panneau brut (1_{R}) de telle manière que l'agent ignifuge soit contenu dans des cavités (2) qui sont disposées dans différentes zones de surface du panneau brut (1_{R}) avec différentes distances et/ou dans différents volumes, et
déplacement d'au moins un dispositif d'injection (15) hors du panneau brut (1_{R}) à la fin de l'étape d'introduction.

9. Procédé selon la revendication 8, **caractérisé en ce que** la profondeur de pénétration d'au moins un dispositif d'injection (15) est modifiée pendant l'injection.

10. Procédé selon la revendication 8 ou 9, **caractérisé en ce que** plusieurs dispositifs d'injection (15) sont utilisés pour l'introduction de l'agent ignifuge, sachant que ceux-ci sont alimentés de préférence de manière sélective en agent ignifuge.
